# EUROPÄISCHE PATENTSCHRIFT

(11) **EP 0 762 582 B1**
(45) Veröffentlichungstag und Bekanntmachung des Hinweises auf die Patenterteilung: **07.04.1999**
(21) Anmeldenummer: 96108806.9
(22) Anmeldetag: 01.06.1996
(51) Int. Cl.: H02B 1/21

(54) **Adapter für Sammelschienensysteme**
Adapter for bus bar systems
Adaptateur pour systèmes de barres omnibus

(30) Priorität: 04.09.1995 CH 2509/95
(43) Veröffentlichungstag der Anmeldung: 12.03.1997
(73) Patentinhaber: Rockwell Automation AG, CH-5001 Aarau (CH)
(72) Erfinder: Mathiowetz, Jörg, 65366 Geisenheim (DE); Rischard, Karl, 5016 Obererlinsbach (CH)
(74) Vertreter: Morva, Tibor

(56) Entgegenhaltungen:
- DE-U- 7 923 422
- DE-U- 8 903 582
- DE-U- 9 003 885

## Beschreibung

Die vorliegende betrifft einen Adapter für Sammelschienensysteme, mit einem Sockelelement, das Aufsteckfüsse aufweist, zum hintergreifenden Aufstecken des Sockelelementes auf die Sammelschienen in einer Aufsteckrichtung senkrecht zur Längserstreckung der Sammelschienen, mit selbsttätiger Arretierung des Sockelelementes auf dem Sammelschienensystem mittels eines im Sockelelement gehaltenen Arretierungselementes.

Sammelschienen, die meist aus Flachkupfer hergestellt sind, stellen in der Schaltanlage den Zugang zur Stromquelle her. An diesen Sammelschienen sind die Abgänge zu den einzelnen Stromverbrauchern angeschlossen. Um Leitungen, Kabel und sonstige Anlagenteile vor Kurzschluss und Ueberlastung zu schützen, finden gegebenenfalls Sicherungen Verwendung.

Aus dem DE-GM 89 03 582 ist ein Adapter für Sammelschienensysteme der eingangs erwähnten Art bekannt, bei dem ein an der Unterseite des Sockelelementes angeordneter, federnd nachgebender Verriegelungshebel mit mehreren hintereinanderliegenden Rastvorsprüngen zum lösbaren Hintergreifen unterschiedlich breiter Sammelschienen vorgesehen ist. Diese Arretierung dient dem Zweck, den Adapter in seiner Aufsteckrichtung festzulegen; auf der einen Seite der jeweiligen Sammelschiene mittels des zugeordneten Aufsteckfusses, auf der anderen Seite einer der Sammelschienen mittels eines Verriegelungshebels. Die bei diesem Adapter Verwendung findende Arretierung ist nicht geeignet, den Adapter in Längsrichtung des Sammelschienensystems festzulegen.

Das Festlegen des Adapters in Längsrichtung des Sammelschienensystems ist insbesondere dann zweckmässig, wenn die Sammelschienen vertikal angeordnet sind und damit die Gefahr besteht, dass ein mit dem Sockelelement verbundenes elektrisches Gerät bzw. mit diesem verbundene elektrische Geräte zusammen mit dem Sockelelement sich relativ zu den Sammelschienen verschieben. Dessenungeachtet ist es auch bei jeder anderen Einbaulage der Sammelschiene von Vorteil, wenn sichergestellt ist, dass keine Relativverschiebung von Sammelschienen und Sockelelement erfolgen kann.

Aus der DE-OS 35 10 210 ist eine Anschlussklemme zum Aufsetzen auf Sammelschienen bekannt. Die Anschlussklemme besteht aus einem U-förmigen Klemmengehäuse mit maulförmigen Ausschnitten, in die die Sammelschiene eingreift. Im Klemmengehäuse ist eine als Schenkelfeder ausgebildete, aus einem Flachfedermaterial hergestellte Haltefeder eingesetzt, deren einer Schenkel mit seinem freien Ende formschlüssig an der Sammelschiene anliegt und auf dieser Weise das Gehäuse mit der Sammelschiene verklemmt. Der Formschluss kommt dadurch zustande, dass sich das freie Ende der Haltefeder aufgrund der Federkraft beim Aufsetzen der Anschlussklemme auf die Sammelschiene geringfügig in das weichere Material der Sammelschien eingräbt. Ein Nachteil dieser Anordnung ist dadurch gegeben, dass das Flachmaterial der Haltefeder mit seiner Schmalseite in Längsrichtung der Sammelschiene ausgerichtet ist. Wenn sich das Ende dieser Haltefeder in die Sammelschiene eingräbt, hält nur die Schmalseite des Flachfedermaterials die Anschlussklemme an der Sammelschiene in der Längsrichtung zurück. Diese Rückhaltekraft ist bei Adaptern, insbesondere bei Adaptern mit schweren daran befestigten Apparaten unzureichend.

Es ist die Aufgabe der vorliegenden Erfindung, einen Adapter für Sammelschienensysteme der eingangs erwähnten Art so weiter zu bilden, dass dieser eine sichere Verbindung auch mit einem vertikal ausgerichteten Sammelschienensystem in Längsrichtung des Sammelschienensystems gewährleistet.

Die gestellte Aufgabe ist dadurch gelöst, dass das Arretierungselement eine in der Aufsteckrichtung angeordnete Schneidkante zum einschneidenden Eingriff in mindestens eine der Sammelschienen beim Aufstecken des Sockelelementes aufweist. Das für die Erfindung wesentliche Arretierungselement schneidet sich somit beim Aufstecken des Sockelelementes auf die Sammelschienen in die mindestens eine der Sammelschienen ein. Dies setzt voraus, dass zumindest die Schneidkante des Arretierungselemetes eine grosse Härte gegenüber der Härte der betreffenden Sammelschiene aufweist. Selbstverständlich besteht auch die Möglichkeit, dass sich ein Arretierungselement in mehrere Sammelschienen einschneidet, oder dass mehrere Arretierungselemente vorgesehen sind, wobei sich jeweils ein Arretierungselement in eine Sammelschiene einschneidet. Bei dem erfindungsgemässen Adapter dient das Sockelelement bevorzugt der Auf; nahme eines oder mehrerer elektrischer Geräte oder ist Bestandteil eines elektrischen Grätes.

Gedacht ist beispielsweise daran, dass das Arretierungselement insgesamt oder zumindest dessen Schneidkante aus Hartmetall, insbesondere aus Stahl besteht, während die Sammelschienen aus weichem Metall, insbesondere aus Kupfer oder Aluminium oder deren Legierung bestehen.

Das Sockelelement weist zweckmässig ein Gehäuse und die Aufsteckfüsse auf. Das jeweilige Arretierungselement kann im Gehäuse oder im Aufsteckfuss gehalten sein, um die vorbeschriebene Wirkung zu erzielen. Es wird allerdings als vorteilhaft angesehen, wenn das Arretierungselement im Gehäuse gehalten ist.

Gemäss einer besonderen Ausführungsform der Erfindung ist vorgesehen. dass das Arretierungselement als ebenes, dünnwandiges Plättchen ausgebildet ist. Ein solches Arretierungselement lässt sich einfach herstellen, wobei sich die Schneidkante des Arretierungselementes allein aufgrund des Umstandes ergibt, dass dieses als dünnwandiges Plättchen ausgebildet ist und somit eine schmale Kante aufweist, die für den einschneidenden Eingriff in eine der Sammelschienen beim Aufstecken des Sockelelementes geeignet ist. Gegebenenfalls kann das dünnwandige Plättchen im Bereich der Kante noch spitzer zugeschliffen sein.

Eine bevorzugte Gestaltung sieht vor, dass die Hauptebene des Plättchens senkrecht zur Längserstreckung der mit diesem zusammenwirkenden Sammelschiene angeordnet ist. Das Gehäuse des Sockelelementes muss damit bei dessen Aufstecken auf die Sammelschienen nur über das Plättchen eingeleitete Druckkräfte aufnehmen. Infolgedessen kann die Lagerung des Plättchens im Gehäuse besonders einfach gestaltet werden.

Eine vorteilhafte Weiterbildung der Erfindung sieht vor, dass das Arretierelement in einem in das Gehäuse einsteckbaren Modul gehalten ist. Ein solches Modul stellt eine einfache Möglichkeit dar, einen vorhandenen Adapter hinsichtlich dessen Aufbau und Funktionsweise zu erweitern. Aufgrund dieses Moduls kann ein bereits vorhandenes Sockelelement unkompliziert mit dem erfindungsgemässen Arratierelement nachgerüstet werden. Zweckmässig ist das Modul aus zwei miteinandet verbundenen Lagerteilen gebildet, die zwischen sich das Plättchen aufnehmen, wobei ein Lagerteil einen senkrecht zur Hauptebene des Plättchens orientierten Lagerdorn aufweist, der eine Oeffnung im Plättchen und dem anderen Lagerteil durchsetzt. Der Lagerdorn dient damit der zentrierten Aufnahme des Plättchens im Modul, er ist darüber hinaus zusätzlich im anderen Lagerteil gelagert, so dass die beim Aufstecken des Sockelelemnetes auf die Sammelschienen über das Plättchen in die zugeordnete Sammelschiene eingeleiteten Kräfte von beiden Lagerteilen aufgenommen werden. Eine besonders einfache Herstellung des Moduls ergibt sich, wenn dieses, wie auch der Adapter, insgesamt aus Kunststoff besteht, insbesondere als Spritzgussteil ausgebildet ist, womit die Möglichkeit besteht, beide Lagerteile über ein Filmscharnier miteinander zu verbinden. Auf ihren dem Filmscharnier abgewandten Seiten sind die Lagerteile dann zweckmässig mit Rastelementen zu deren Verbinden auf dieser Seite versehen. Vorteilhaft ist der Lagerdorn konisch ausgebildet und durchsetzt bei miteinander verbundenen Lagerteilen die Kreisöffnung im Plättchen ohne Radialspiel. Hierdurch lässt sie auf einfache Art und Weise eine eindeutige Position des Arretierelementes und damit deren Schneidkante zur zugeordneten Sammelschiene vorgeben.

Eine besonders vorteilhafte Ausbildung der Schneidkante sieht vor, dass diese abgewinkelt ist, wobei ein erster, beim Aufstecken des Sockels auf die Sammelschienen vorlaufender Schneidkantenabschnitt unter einem spitzen Winkel zur von diesem kontaktierten Hauptfläche der zugewandten Sammelschiene, sowie ein sich an den ersten Schneidkantenabschnitt anschliessender zweite Schneidkantenabschnitt parallel zu der kontaktierten Hauptfläche der zugeordneten Sammelschiene angeordnet ist. Diese Gestaltung der Schneidkante stellt sicher, dass sich mit zunehmendem Aufstecken des Sockels auf die Sammelschiene das Arretierungselement stärker in die Sammelschiene einschneidet und bei Erreichen der maximalen Einschneidtiefe der zweite Schneidkantenabschnitt den zuerst eingeschnittenen Bereich der Sammelschiene kontaktiert, so dass die zwischen der Sammelschiene und dem Sockelelement übertragenden Kräfte im wesentlichen senkrecht zur kontaktierten Hauptfläche der zugewandten Sammelschiene gerichtet sind. Selbstverständlich können, wie zuvor zum Stand der Technik beschrieben, weitere Arretierelemente vorgesehen sein, die den Adapter entgegen dessen Aufsteckrichtung festlegen. Es können auch mehrere erfindungsgemässe Arretierungselemente zum Festlegen das Adapters im Sockel gelagert sein.

Weitere Merkmale der Erfindung sind in der Beschreibung der Figuren und in den Unteransprüchen dargestellt, wobei bemerkt wird, dass alle Einzelmerkmale und alle Kombinationen von Einzelmerkmalen erfindungswesentlich sind.

In den Figuren ist die Erfindung anhand einer Ausführungsform beispielsweise dargestellt, ohne auf diese beschränkt zu sein. Es zeigen:
- Fig.1: eine räumliche Ansicht des erfindungsgemässen Adapters mit in dessen Gehäuse eingestecktem Arretierelement,
- Fig.2: die räumliche Ansicht des in Fig.1 gezeigten Adapters mit aus diesem entferntem Arretierelement,
- Fig.3: eine räumliche Ansicht des aufgeklappten Modules zur Aufnahme eines Arretierplättchens zwischen zwei Lagerteilen, gezeigt vor dem Einsetzen des Plättchens in eines der Lagerteile und
- Fig.4: eine Darstellung gemäss Fig.3 nach dem Einsetzen des Plättchens.

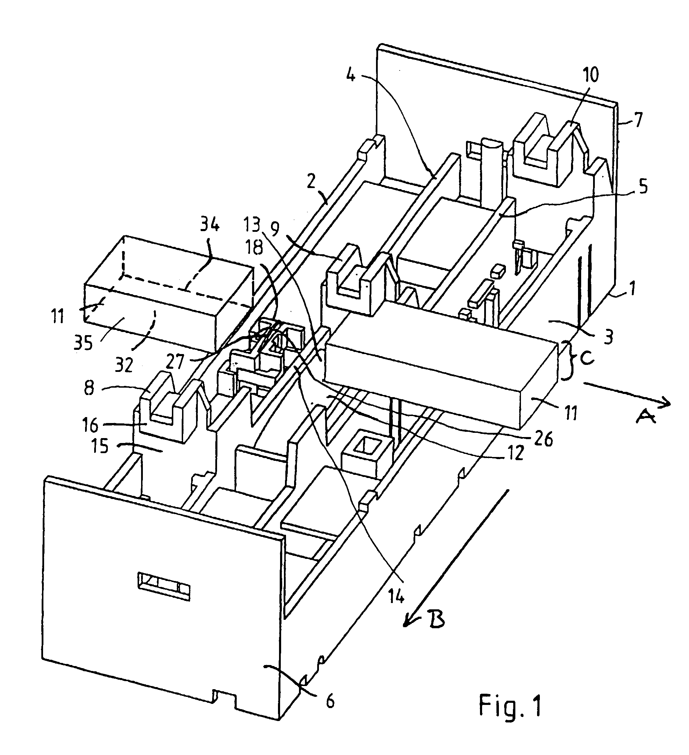

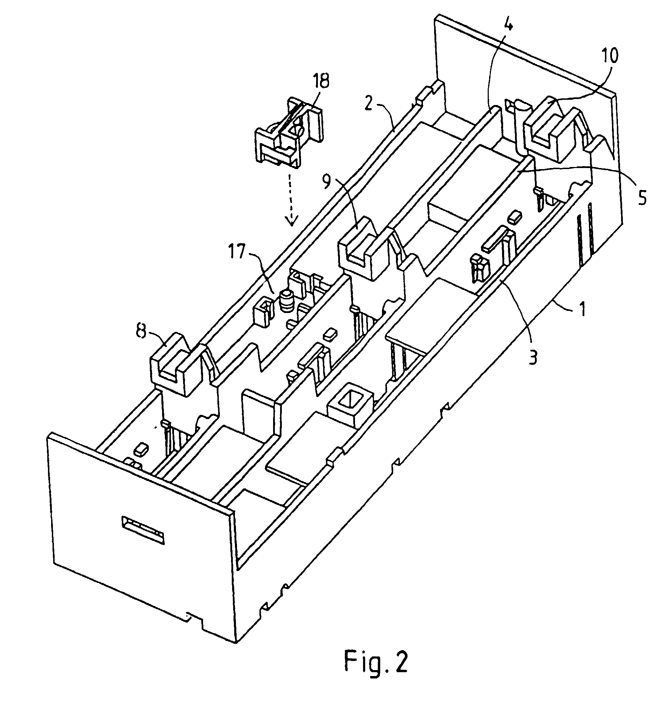

Die Figuren 1 und 2 zeigen stark vereinfacht einen Adapter für Sammelschienensysteme, wobei dieser Adapter auf der den Sammelschienen abgewandten Seite der Aufnahme eines elektrischen Gerätes dient. Der Adapter weist ein Sockelelement 1 auf, das in seiner Längsrichtung mittels seiner beiden Aussenlängswänden 2 und 3 sowie der beiden dazwischen befindlichen Trennwände 4 und 5 drei Räume voneinander abtrennt. Strinseitig werden die Räume durch Stirnwände 6 und 7 des Sockelelementes begrenzt. In gleichen Längsabständen sind im Sockelelement 1, je einem der abgetrennten Räume zugeordnet, Aufsteckfüsse 8, 9 und 10 gelagert, die dem Aufstecken auf je eine Sammelschiene dienen. In der Fig.1 ist nur die mittlere Sammelschiene 11, die vom Aufsteckfuss 9 hintergriffen wird, gezeigt. Um die erfindungsgemässe Gestaltung des Adapters besser verdeutlichen zu können, ist diese Sammelschiene 11 unterbrochen dargestellt, obwohl sie sich selbstverständlich ununterbrochen in Längsrichtung A des Sammelschienensystems erstreckt. Die beiden anderen, den Aufsteckfüssen 8, 10 zugeordneten, parallel zur Sammelschiene 11 verlaufenden Sammelschienen sind aus Gründen zeichnerischer Klarheit nicht eingezeichnet worden. Aus diesem Grunde ist auch nur die dem mittleren Raum zugeordnete, gebogene Kontaktfeder 12 veranschaulicht worden, deren freier Schenkel 13 in relativ entspanntem Zustand oberhalb der Oberkante der Trennwand 4 zu liegen kommt. Die Kontaktfeder 12 ist im wesentlichen U-förmig ausgebildet, wobei der nicht veranschaulichte andere Schenkel im Bereich des Bodens des Gehäuses 1 befestigt und elektrisch leitend mit dem vom Sockelelement aufgenommenen elektrischen Gerät verbunden. Entsprechend ist das Gehäuse 1 auch im Bereich der Aufsteckfüsse 8, 10 mit Kontaktfedern 12 versehen, die aus Gründen zeichnerischer Klarheit gleichfalls nicht dargestellt sind.

Wie der Darstellung der Figuren 1 und 2 zu entnehmen ist, weist der jeweilige Aufsteckfuss 8, 9, 10 einen mit dem Gehäuse 1 verbundenen, senkrecht zur Aufsteckrichtung B des Adapters angeordneten Plattenabschnitt 15, sowie im Bereich dessen freien Endes einen in Aufsteckrichtung B orientierten Fussabschnitt 16 auf.

Die drei Sammelschienen weisen rechteckigen Querschnitt auf und sind entsprechend dem Abstand der Aufsteckfüsse 8, 9, 10 beabstandet, so dass beim Aufstecken der Aufsteckfüsse 8, 9, 10 auf die Sammelschienen die Kontaktfeder 12 die Sammelschiene 11 gegen den Fussabschnitt 18 drückt und die Sammelschiene 11 im übrigen am Plattenabschnitt 15 anliegt. Die Druckkraft der Kontaktfeder 12 nimmt dabei wegen deren Krümmung mit fortschreitendem Aufstecken der Aufteckfüsse zu. Eine weitere Arretierung der Sammelschiene 11 erfolgt auf der dem Plattenabschnitt 15 abgewandten Seite der Sammelschiene 11 durch ein weiteres, nicht gezeigtes Arretierungselement. Entsprechendes gilt hinsichtlich der Fixierung der beiden anderen Sammelschienen.

Der Darstellung der Fig.2 ist zu entnehmen, dass in dem zwischen der Aussenlängswand 2 und der Trennwand 4 gebildeten Raum unterhalb der eingesteckten Sammelschiene 11 ein Einsteckschacht 17 für eine Arretierung 18 vorgesehen ist, die von oben in den Einsteckschacht 17 einsteckbar ist. Die eingesteckte Position der Arretierung 18 ist in Fig.1 verdeutlicht.

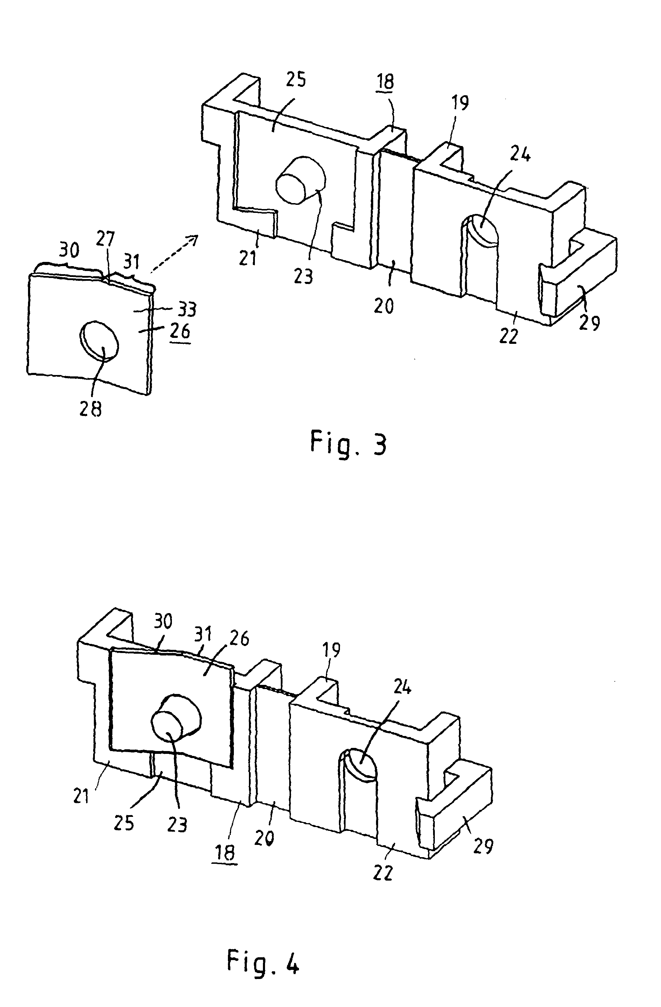

Die Figuren 3 und 4 veranschaulichen im Detail die Ausbildung der Arretierung 18. Diese weist ein Modul 19 auf, das in das Gehäuse 1 im vorbeschriebenen Sinne, das heisst senkrecht zur Längserstreckung A der Sammelschiene 11 und senkrecht zur Aufsteckrichtung B des Gehäuses 1, in dieses eingesetzt werden kann. Das Modul 19 ist als Kunststoffspritzteil ausgebildet und besteht aus zwei miteinander über ein Filmscharnier 20 verbundenen Lagerteilen 21, 22. Das eine Lagerteil 21 ist mit einem Lagerdorn 23 versehen, der sich, ausgehend von diesem, konisch verjüngt und bei aufeinandergeklappten Lagerteilen 21, 22 eine Bohrung 24 im Lagerteil 22 durchsetzt. In einer Ebene senkrecht zum Lagerdorn 23 ist das Lagerteil 21 zusätzlich mit einer Hinterschneidung 25 versehen, die der Aufnahme eines Arretierelementes in Art eines ebenen, dünnwandigen Plättchens 26 aus gehärtetem Stahl dient. Die seitliche und untere Kontur des Plättchens 26 ist der Kontur der Hinterschneidung 25 im Lagerteil 21 angepasst, während die obere Kante 27 die die Funktion einer Schneidkante aufweist, oben über die Lagerteile 21, 22 hervorsteht. Zusätzlich ist das Plättchen 26 mit einer Bohrung 28 versehen, die so auf den Aussendurchmesser des Lagerdorns 23 im Bereich der Hinterschneidung 25 abgestimmt ist, dass das Plättchen 26 dort vom Lagerdorn 23 weitgehend spielfrei aufgenommen wird. Das Lagerteil 22 weist im Bereich seines dem Filmscharnier 20 abgewandten Endes einen angeformten Rasthaken 29 auf, der beim Bilden des Moduls 19 durch Klappen des Lagerteils 22 auf das Lagerteil 21 zu, nach zuvor eingelegtem Plättchen 26, hinter komplementäre, nicht gezeigte Rastkanten im Bereich des den Filmscharnier 20 abgewandten Endes des anderen Lagerteils 21 einrastet. Hierdurch ist das Plättchen 26 im Modul 19 gehalten und es braucht das Modul 19 nur in den Einsteckschaft, mit dem Dorn in Längsrichtung A orientiert, eingesteckt werden. In dieser Position ist die Schneidkante 27 des Plättchens 26 in Aufsteckrichtung B orientiert, wobei die Einsteckhöhe des Moduls 17 relativ zum Gehäuse 1 so bemessen ist, dass der minimale Abstand zwischen der Schneidkante 27 und dem Fussabschnitt 16 des Aufsteckfusses 9 geringer ist als die Stärke C dieser Sammelschiene 11. Minimaler Abstand deshalb, weil, wie insbesondere der Darstellung der Figuren 3 und 4 zu entnehmen ist, die Schneidkante 27 nicht gerade verläuft, sondern abgewinkelt ist, wobei ein erster, beim Aufstecken des Gehäuses 1 auf die Sammelschiene 10 vorlaufender Schneidkantenabschnitt 30 unter einem spitzen Winkel zur von diesem kontaktierten Hauptfläche 32 der Sammelschiene 11, sowie ein sich an diesen ersten Schneidkantenabschnitt 30 anschliessender zweiter Schneidkantenabschnitt 31 parallel zu der Hauptfläche 32 angeordnet ist. Gedacht ist dabei an einen Winkel, den der Schneidkantenabschnitt 30 mit der Hauptfläche 32 einschliesst, von 5 bis 20°.

Beim Aufstecken des Adapters auf die drei Sammelschienen kontaktieren zunächst die scheitelnahen Bereiche der drei Kontaktfedern 12 die Sammelschienen und führen diese mit zunehmendem Aufsteckweg in Richtung der Hauptebene 33 des Plättchens 26 auf den Fussabschnitt 16 des jeweiligen Aufteckfusses 8, 9, 10 zu. Sobald der Fussabschnitt 16 die Sammelschiene 11 hintergreift, gelangt das nun unterhalb der Sammelschiene 11 befindliche Plättchen 26, mit dem vorlaufenden Schneidkantenabschnitt 30, in Kontakt mit der Kante 34 der Sammelschiene 11 und schneidet sich in diese ein, bis schliesslich mit zunehmender Aufsteckbewegung auch der nachlaufende Schneidkantenabschnitt 31 wirksam wird. Bei vollständig aufgestecktem Gehäuse 1 erstreckt sich der Einschnitt des Plättchens 26 in die Hauptfläche 32 der Sammelschiene 11 von der Kante 34 ausgehend zunächst über die ganze Länge des Schneidkantenabschnittes 31 und von dort über eine Teillänge des Schneidkantenabschnittes 30, wobei der vorderste Bereich dieses Schneidkantenabschnittes 30 aus der Sammelschiene 11 ragt. Bei vollständig aufgestecktem Gehäuse 1 arretiert das nicht gezeigte zusätzliche Arretierelement eine der Sammelschienen im Bereich der Seitenfläche 35.

Aufgrund des einschneidenden Eingriffes des Plättchens 26 in zumindest eine der Sammelschienen, vorstehend die Sammelschiene 11, ist das Gehäuse 1 und damit der Adapter in Längsrichtung A des Sammelschienensystems arretiert.

## Patentansprüche

1. Adapter für Sammelschienensysteme, mit einem Sockelelement (1), das Aufsteckfüsse (8,9,10) aufweist, zum hintergreifenden Aufstecken des Sockelelementes (1) auf die Sammelschienen (11) in einer Aufsteckrichtung (B) senkrecht zur Längserstreckung (A) der Sammelschienen (11), mit selbsttätiger Arretierung des Sockelelementes (1) auf dem Sammelschienensystem mittels eines im Sockelelement (1) gehaltenen Arretierungselementes (26), **dadurch gekennzeichnet, dass** das Arretierungselement (26) eine in der Aufsteckrichtung (B) angeordnete Schneidkante (27) zum einschneidenden Eingriff in mindestens eine der Sammelschienen (11) beim Aufstecken des Sockelelementes (1, 8, 9, 10) aufweist.

2. Adapter nach Anspruch 1, **dadurch gekennzeichnet, dass** das Sockelelement (1, 8, 9, 10) ein Gehäuse (1) und die Aufsteckfüsse (8, 9, 10) aufweist, wobei das Arretierungselement (26) im Gehäuse (1) gehalten ist.

3. Adapter nach einem der Ansprüche 1 bis 2, **dadurch gekennzeichnet, dass** das Arretierungselement (26) als ebenes, dünnwandiges Plättchen ausgebildet ist.

4. Adapter nach einem der Ansprüche 1 bis 3, **dadurch gekennzeichnet, dass** das Arretierungselement (26) aus Hartmetall, insbesondere aus Stahl besteht, und die Sammelschienen (11) aus weichem Material, insbesondere aus Kupfer oder Aluminium oder deren Legierungen bestehen.

5. Adapter nach einem der Ansprüche 3 bis 4, **dadurch gekkenzeichnet, dass** die Hauptebene (33) des Plättchens (26) senkrecht zur Längserstreckung (A) der mit diesem zusammenwirkenden Sammelschienen (11) angeordnet ist.

6. Adapter nach einem der Ansprüche 1 bis 5, **dadurch gekennzeichnet, dass** das Arretierungselement (26) in einem in das Gehäuse (1) einsteckbaren Modul (19) gehalten ist.

7. Adapter nach Anspruch 6, **dadurch gekennzeichnet, dass** das Modul (19) aus zwei miteinander verbundenen Lagerteilen (21, 22) gebildet ist, die zwischen sich das Plättchen (26) aufnehmen, wobei ein Lagerteil (21) einen senkrecht zur Hauptebene (33) des Plättchens (26) orientierten Lagerdorn (23) aufweist, der eine Oeffnung (28) im Plättchen (26) und eine Oeffnung (24) im anderen Lagerteil (22) durchsetzt.

8. Adapter nach Anspruch 7, **dadurch gekennzeichnet, dass** die beiden Lagerteile (21, 22) über ein Filmscharnier (20) miteinander verbunden sind und auf ihren dem Filmscharnier (20) abgewandten Seiten mit Rastelementen (29) zu deren Verbinden auf dieser Seite vorgesehen sind.

9. Adapter nach einem der Ansprüche 7 bis 8, **dadurch gekennzeichnet, dass** der Lagerdorn (23) konisch ausgebildet ist und dieser bei miteinander verbundenen Lagerteilen (21, 22) die Kreisöffnung (28) im Plättchen (26) ohne Radialspiel durchsetzt.

10. Adapter nach einem der Ansprüche 1 bis 9, **dadurch geklennzeichnet, dass** die Schneidkante (27) abgewinkelt ausgebildet ist, wobei ein erster, beim Aufstecken des Sockelelementes (1, 8, 9, 10) auf die Sammelschienen (11) vorlaufender Schneidkantenabschnitt (30) unter einem spitzen Winkel zur von diesem kontaktierten Hauptfläche (32) der zugewandten Sammelschiene (11), sowie ein sich an den ersten Schneidkantenabschnitt (30) anschliessender zweiter Schneidkantenabschnitt (31) parallel zu der kontaktierten Hauptfläche (32) der zugewandten Sammelschiene (11) angeordnet ist.

11. Adapter nach Anspruch 10, **dadurch gekennzeichnet, dass** der spitze Winkel 5 bis 20° beträgt.

12. Adapter nach einem der Ansprüche 1 bis 11, **dadurch gekennzeichnet, dass** das Sockelelement (1, 8, 9, 10) der Aufnahme eines elektrischen Gerätes dient.

13. Adapter nach Anspruch 12, **dadurch gekennzeichnet, dass** das Sockelelement (1, 8, 9, 10) ein Gehäuse (1) und die nach aussen ragenden Aufsteckfüsse (8, 9, 10) aufweist, wobei im Gehäuse (1) Kontaktfedern (12) gehalten sind, die die Sammelschienen (11) diametral zum hintergreifenden Abschnitt (16) der Kontaktfüsse (8, 9, 19) kontaktieren.

14. Adapter nach Anspruch 13, **dadurch gekennzeichnet, dass** die Kontaktfeder (12), die mit der arretierten Sammelschiene (11) zusammenwirkt, gebogen ausgebildet ist, derart, dass ein maximaler Kontaktdruck der Kontaktfeder (12) bei vollständig aufgestecktem Sockelelement (1, 8, 9, 10) erreicht wird.

## Claims

1. Adapter for bus-bar systems including a base element (1) having clip-on feet (8, 9, 10) for mounting the base element (1) onto the bus-bars (11) by gripping therebehind, the direction (B) in which the mounting action is effected being perpendicular to the longitudinal extent (A) of the bus-bars (11) and the base element (1) being automatically locked on the bus-bar system by means of a locking element (26) contained in the base element (1), characterised in that the locking element (26) comprises a cutting edge (27) aligned with the direction of mounting (B) for engaging in at least one of the bus-bars (11) by cutting thereinto when the base element (1, 8, 9, 10) is mounted thereon.

2. Adapter in accordance with Claim 1, characterised in that the base element (1, 8, 9, 10) comprises a housing (1) and the clip-on feet (8, 9, 10) whereby the locking element (26) is retained in the housing (1).

3. Adapter in accordance with either of the Claims 1 and 2, characterised in that the locking element (26) is in the form of a flat, thin-walled lamina.

4. Adapter in accordance with any of the Claims 1 to 3, characterised in that the locking element (26) consists of a hard metal, in particular of steel, and the bus-bars (11) consist of a soft material, in particular, of copper or aluminium or an alloy thereof.

5. Adapter in accordance with either of the Claims 3 and 4, characterised in that the main plane (33) of the lamina (26) is disposed at right angles to the longitudinal extent (A) of the bus-bars (11) which co-operate therewith.

6. Adapter in accordance with any of the Claims 1 to 5, characterised in that the locking element (26) is retained in a module (19) which is insertable into the housing (1).

7. Adapter in accordance with Claim 6, characterised in that the module (19) is formed by two support parts (21, 22) which are connected together and accommodate the lamina (26) therebetween, whereby one support part (21) comprises a support pin (23) oriented perpendicularly relative to the main plane (33) of the lamina (26), said support pin (23) penetrating an opening (28) in the lamina (26) and an opening (24) in the other support part (22).

8. Adapter in accordance with Claim 7, characterised in that the two support parts (21, 22) are connected together by a film hinge (20) and latching elements (29) are provided on the sides thereof remote from the film-hinge (20) for the connection thereof on this side.

9. Adapter in accordance with either of the Claims 7 and 8, characterised in that the support pin (23) is of conical construction and penetrates the circular opening (28) in the lamina (26) without any radial play when the support parts (21, 22) are connected together.

10. Adapter in accordance with any of the Claims 1 to 9, characterised in that the cutting edge (27) is bent whereby a first leading section (30) of the cutting edge is disposed at an acute angle relative to the main surface (32) of the facing bus-bar (11) with which it is in contact when the base element (1, 8, 9, 10) is mounted on the bus-bars (11), and a second section (31) of the cutting edge contiguous with the first section (30) of the cutting edge is disposed parallel to the main surface (32) of the facing bus-bar (11) which is being contacted.

11. Adapter in accordance with Claim 10, characterised in that the acute angle lies between 5 and 20°.

12. Adapter in accordance with any of the Claims 1 to 11, characterised in that the base element (1, 8, 9, 10) serves to accommodate an electrical appliance.

13. Adapter in accordance with Claim 12, characterised in that the base element (1, 8, 9, 10) comprises a housing (1) and the outwardly projecting clip-on feet (8, 9, 10), whereby contact springs (12) are contained in the housing (12), said contact springs (12) contacting the bus-bars (11) diametrically opposite to the rear-gripping sections (16) of the contact feet (8, 9, 19 [sic]).

14. Adapter in accordance with Claim 13, characterised in that the contact spring (12) which co-operates with the latched bus-bar (11) is curved in such manner that maximum contact pressure of the contact spring (12) is achieved when the base element (1, 8, 9, 10) is fully mounted.

## Revendications

1. Adaptateur pour systèmes de barres omnibus, comprenant un élément formant socle (1), présentant des pieds d'enfichage (8, 9, 10), pour enficher avec saisie par l'arrière l'élément formant socle (1) sur les barres omnibus (11) dans une direction d'enfichage (B) orientée perpendiculairement par rapport à la direction longitudinale (A) des barres omnibus (11), avec un blocage automatique de l'élément formant socle (1) sur le système de barres omnibus, au moyen d'un élément de blocage (26) maintenu dans l'élément formant socle (1),
caractérisé en ce que
l'élément de blocage (26) présente une arrête de découpage (27) disposée dans la direction d'enfichage (B), pour assurer une mise en prise avec effet d'entaillage dans au moins l'une des barres omnibus (11), lors de l'enfichage de l'élément formant socle (1, 8, 9, 10).

2. Adaptateur selon la revendication 1,
caractérisé en ce que
l'élément formant socle (1, 8, 9, 10) présente un boîtier (1) et les pieds d'enfichage (8, 9, 10), l'élément de blocage (26) étant maintenu dans le boîtier (1).

3. Adaptateur selon l'une des revendications 1 à 2,
caractérisé en ce que
l'élément de blocage (26) est configuré sous forme de plaquette plane à paroi mince.

4. Adaptateur selon l'une des revendications 1 à 3,
caractérisé en ce que
l'élément de blocage (26) est réalisé en métal dur, en particulier en acier, et les barres omnibus (11) sont constituées d'un matériau mou, en particulier en cuivre ou en aluminium ou leur alliage.

5. Adaptateur selon l'une des revendications 3 à 4,
caractérisé en ce que
le plan principal (33) de la plaquette (26) est orienté perpendiculairement par rapport à la direction longitudinale (A) des barres omnibus (11) coopérant avec celle-ci.

6. Adaptateur selon l'une des revendications 1 à 5,
caractérisé en ce que
l'élément de blocage (26) est maintenu dans un module (19) susceptible d'être enfiché dans le boîtier (1).

7. Adaptateur selon la revendication 6,
caractérisé en ce que
le module (19) est constitué de deux parties formant palier (21, 22) reliées ensemble, recevant entre elles la plaquette (26), une partie formant palier (21) présentant un tourillon de palier (23), orienté perpendiculairement par rapport au plan principal (33) de la plaquette (26) et traversant une ouverture (28) ménagée dans la plaquette (26) et une ouverture (24) ménagée dans l'autre partie formant palier (22).

8. Adaptateur selon la revendication 7,
caractérisé en ce que
les deux parties formant palier (21, 22) sont reliées ensemble par l'intermédiaire d'un écran-charnière et, sur leurs faces opposées à l'écran-charnière (20), sont dotées d'éléments d'encliquetage (29) destinés à assurer leur liaison sur cette face.

9. Adaptateur selon l'une des revendications 7 à 8,
caractérisé en ce que
le tourillon de palier (23) est de configuration conique et celui-ci, lorsque les parties formant paliers (21, 22) sont reliées ensemble traversant sans jeu radial l'ouverture circulaire (28) ménagée dans la plaquette (26).

10. Adaptateur selon l'une des revendications 1 à 9,
caractérisé en ce que
l'arête de découpage (27) est coudée, un premier tronçon d'arête de découpage (30), se déplaçant à l'avant sur les barres omnibus (11) lors de l'enfichage de l'élément formant socle (1, 8, 9, 10), étant disposé sous un angle aigu par rapport à la face principale (32), mise en contact par celui-ci, de la barre omnibus (11) tournée vers lui, ainsi qu'un deuxième tronçon d'arête de découpage (31), connexe au premier tronçon d'arête de découpage (30), disposé parallèlement à la face principale (32) mise en contact de la barre omnibus (11) tournée vers lui.

11. Adaptateur selon la revendication 10,
caractérisé en ce que
l'angle aigu a une valeur de 5 à 20°.

12. Adaptateur selon l'une des revendications 1 à 11,
caractérisé en ce que
l'élément formant socle (1, 8, 9, 10) sert à recevoir un appareil électrique.

13. Adaptateur selon la revendication 12,
caractérisé en ce que
l'élément formant socle (1, 8, 9, 10) présente un boîtier (1) et les pieds d'enfichage (8, 9, 10) faisant saillie vers l'extérieur, dans le boîtier (1) étant maintenus des ressorts de contact (12) qui assurent la mise en contact des barres omnibus (11) diamétralement par rapport au tronçon (16), assurant une saisie par l'arrière, des pieds de contact (8, 9, 19)

14. Adaptateur selon la revendication 13,
caractérisé en ce que
le ressort de contact (12) qui coopère avec la barre omnibus (11) bloquée est de configuration incurvée, de manière qu'une pression de contact maximale du ressort de contact (12) soit atteinte lorsque l'élément formant socle (1, 8, 9, 10) est complètement enfiché.
